# NEUE EUROPÄISCHE PATENTSCHRIFT

(11) **EP 2 206 572 B2**
(45) Veröffentlichungstag und Bekanntmachung des Hinweises auf die Entscheidung über den Einspruch: **19.07.2017**
(45) Hinweis auf die Patenterteilung: 09.05.2012
(21) Anmeldenummer: 10150410.8
(22) Anmeldetag: 11.01.2010
(51) Int. Cl.: B25D 16/00

(54) **Elektrowerkzeug mit schaltbarem Getriebe**
Electric tool with switchable gear
Outil électrique doté d'un engrenage commutable

(30) Priorität: 13.01.2009 DE 102009005248
(43) Veröffentlichungstag der Anmeldung: 14.07.2010
(73) Patentinhaber: C. & E. Fein GmbH, 73529 Schwäbisch Gmünd-Bargau (DE)
(72) Erfinder: Richt, Boris, 70771, Leinfelden (DE)
(74) Vertreter: Witte, Weller & Partner Patentanwälte mbB

(56) Entgegenhaltungen:
- WO-A1-2010/028924
- DE-A1- 3 526 150
- DE-A1- 3 904 085
- DE-C1- 10 149 382
- JP-A- 58 059 710

## Beschreibung

Die Erfindung betrifft ein Elektrowerkzeug mit einem schaltbaren Getriebe, insbesondere eine Bohr- oder Schraubmaschine, mit einer Antriebswelle und mindestens einer Abtriebswelle, die mit der Antriebswelle in einer ersten Position mit einem ersten Antriebsmodus und in einer zweiten Position mit einem zweiten Antriebsmodus zum Antrieb einer Werkzeugaufnahme koppelbar ist, wobei zur Umschaltung zwischen den beiden Positionen eine Feder vorgesehen ist, die eine Umschaltung zwischen den beiden Positionen unterstützt, wobei die Feder als bistabile Feder, vorzugsweise als Blattfeder mit zwei stabilen Endzuständen, ausgebildet ist.

Ein derartiges Elektrowerkzeug ist aus der DE 101 49 382 C1 bekannt. Hierbei ist ein am Werkzeuggehäuse verschiebbar gelagerter, in zwei Schaltpositionen bringbarer Schaltschieber vorgesehen, der mit einem verschiebbaren Teil des Getriebes in Wirkverbindung steht. Damit der Schaltschieber in beiden Gangpositionen eine eindeutige Einrastung erfährt, ist eine quer zur Verschieberichtung verlaufende Blattfeder vorgesehen, die mit ihren beiden Enden an nicht mit dem Schaltschieber bewegbaren Auflagern fixiert ist, wobei die Länge der Blattfeder größer als der gegenseitige Abstand der beiden Auflager ist. Mit dieser Blattfeder ist der Schaltschieber kraftschlüssig verbunden. Zur Schaltung des Getriebes wirkt der Schaltschieber mit einem Bügel zusammen, über dessen beide Enden in eine Nut in einer Außenwand eines Hohlrades des Planetenradgetriebes eingreifen, um so eine axiale Verschiebung des Hohlrades und somit eine Veränderung der Getriebeübersetzung des Planetenradgetriebes zu erreichen. Durch die Blattfeder wird hiermit somit mittelbar der Übergang des Getriebes in einen stabilen Schaltzustand unterstützt. Der zusätzlich notwendige Bügel zwischen Schaltschieber und Getriebe führt zu einem relativ komplizierten Aufbau und einer verstärkten Störungsanfälligkeit.

Bei dem bekannten Elektrowerkzeug handelt es sich um eine Bohrmaschine, die zwischen einem Hammermodus und einem Bohrmodus umschaltbar ist. Hierbei werden vom Motorritzel gleichzeitig ein erstes und ein zweites Zahnrad angetrieben. Das erste Zahnrad kann mit einem Kegelzahnrad gekoppelt werden, um die Bohrmaschine im Bohrmodus anzutreiben. Alternativ kann das zweite Zahnrad mit einem Exzentermechanismus gekoppelt werden, über den ein Hammermechanismus angetrieben wird. Zur Umschaltung zwischen dem Bohrmodus und dem Hammermodus dient ein Wipphebel, der eine Axialverschiebung jeweils eines Flansches ermöglicht, um eine Kopplung entweder des einen Zahnrades mit dem Winkelzahnrad oder des anderen Zahnrades mit dem Exzentermechanismus zu ermöglichen. Beide Flansche sind mittels einer Schraubenfeder vorgespannt.

Der bekannte Umschaltmechanismus ist relativ aufwändig und erfordert zwei Federn. Ferner ermöglicht der bekannte Umschaltmechanismus keine Umschaltung während des laufenden Betriebs.

Bei Zwei-Gang-Bohrmaschinen mit Getriebeumschaltung sind im Stand der Technik verschiedene Lösungen gebräuchlich.

So können z.B. die Stirnräder verschoben werden, um eine Einkopplung entweder des einen Stirnrades oder des anderen Stirnrades mit der Abtriebswelle zu ermöglichen. Eine Verschiebung von Stirnrädern führt allerdings zu einer relativ großen axialen Baulänge. Verwendet man eine Federbolzenkupplung zur Umschaltung, so kann diese sowohl im Stillstand als auch im Leerlauf umgeschaltet werden. Sie benötigt jedoch etwa 20 mm axialen Bauraum, wodurch die Maschinenlänge vergrößert wird.

Auch die Verwendung eines Getriebes, das mittels Ziehkeilen umschaltbar ist, ist im Stand der Technik bekannt. Ein Ziehkeilgetriebe kann bedingt im Stillstand als auch im Leerlauf umgeschaltet werden. Da der Ziehkeil im Stillstand erst einrücken kann, wenn die Maschine wieder anläuft, ist beim Umschalten im Stillstand der Umschalter nicht in seiner Endposition und gelangt erst beim nächsten Anlauf dorthin.

Bei einer durch Benutzung bekannt gewordenen Bohrmaschine mit Ziehkeilgetriebe lässt sich das Ziehkeilgetriebe mit zwei Nutensteinen im Stillstand als auch bedingt im Leerlauf umschalten. Allerdings gibt es beim Umschalten im Leerlauf ein unangenehmes Geräusch. Der Umschalter zeigt zwar den neuen Gang an, jedoch ist dieser noch nicht eingelegt. Erst beim Anlauf der Maschine wird der Gang eingelegt.

Grundsätzlich lassen sich die zuvor erwähnten Lösungen auch mit einer Spindelarretierung koppeln, d.h. also mit einer Arretierung der Abtriebswelle, wenn der Drehantrieb abtriebsseitig erfolgt.

Bei der ersten Lösung mit einer Federbolzenkupplung ist eine Spindelarretierung auf der Abtriebswelle bekannt. Bei der zweiten Lösung mit Ziehkeilkupplung ist eine Spindelarretierung auf einer Vorgelegewelle bekannt.

Während die erste Lösung eine unerwünscht große axiale Baulänge aufweist, hat die zweite Lösung mit einer Ziehkeilkupplung den Nachteil, dass die Spindelarretierung an der Vorgelegewelle erfolgt. Soll die Maschine jedoch auch für andere Konstruktionen ohne Vorgelegewelle verwendet werden, so ist hierzu eine neue eigene Spindelarretierung erforderlich, was nachteilig für die Gesamtkosten durch erhöhte Teilevielfalt und Lagerhaltungskosten ist.

Aus der älteren WO 2010/028924 A1, die jedoch nicht vorveröffentlicht ist, ist ein Elektrowerkzeug mit einem schaltbaren Getriebe bekannt, mit einer Antriebswelle und mindestens einer Abtriebswelle, die mit der Antriebswelle in einer ersten Position mit einem ersten Antriebsmodus und in einer zweiten Position mit einem zweiten Antriebsmodus zum Antrieb einer Werkzeugaufnahme koppelbar ist, wobei zur Umschaltung zwischen den beiden Positionen eine Feder vorgesehen ist, die eine Umschaltung zwischen den beiden Positionen unterstützt, wobei die Feder als bistabile Feder mit zwei stabilen Endzuständen ausgebildet ist, und wobei die Feder zwei aneinander gegenüberliegende Zungen aufweist, die mit dem Getriebe zur Umschaltung gekoppelt sind.

Der Erfindung liegt die Aufgabe zugrunde, ein verbessertes Elektrowerkzeug mit einem schaltbaren Getriebe zu schaffen, das eine Umschaltung zwischen zwei Antriebsmodi auf möglichst einfache Weise mit einer kurzen Baulänge ermöglicht. Eine Umschaltung soll sowohl im Stillstand als auch im Leerlauf ohne störende Geräusche ermöglicht sein. Ferner soll eine Kombination mit einer Spindelarretierung an der Abtriebswelle ermöglicht sein.

Erfindungsgemäß wird dies durch ein Elektrowerkzeug mit den Merkmalen der Ansprüche 1, 6 oder 10 gelöst.

Die Aufgabe der Erfindung wird auf diese Weise vollkommen gelöst.

Vorzugsweise ist die Feder als Blattfeder mit zwei stabilen Endzuständen ausgebildet.

Eine derartige Ausführung eines Federelementes, die auch als sog. "Knackfrosch" bekannt ist, erlaubt eine einfache Umschaltung der Feder zwischen den beiden stabilen Endzuständen, und ermöglicht zahlreiche Schaltvorgänge, ohne dass eine Ermüdung der Feder auftritt.

Erfindungsgemäß weist die Feder eine Zunge auf, die mit dem Getriebe zur Umschaltung gekoppelt ist. Die Getriebeumschaltung wird somit durch die Feder selbst über deren Zunge bewirkt.

In vorteilhafter Weiterbildung der Erfindung ist die Feder an zwei einander gegenüberliegenden Enden in einem Gehäuse derart gehalten, dass es bei Betätigung mittels eines Schaltelementes das Getriebe zwischen der ersten und der zweiten Position und umgekehrt umschaltet.

Auf diese Weise muss die bistabile Feder lediglich mittels des Schaltelementes derart aktiviert werden, dass die Verformung der Feder in dem jeweiligen anderen stabilen Zustand erfolgt. Sobald der Übergang zu dem jeweils anderen stabilen Endzustand erreicht ist, erfolgt die Umschaltung des Getriebes zwischen den beiden Positionen selbsttätig.

Die Feder ist im Gehäuse vorzugsweise unter Vorspannung gehalten.

Auf diese Weise wird ein Umschalten zwischen zwei stabilen Endzuständen erleichtert.

Die Zunge kann in einem Bereich zwischen den beiden Enden der Feder angeordnet sein.

Weiter bevorzugt greift das Schaltelement in einem von der Zunge entfernten Bereich an der Feder an.

Hierbei ist die Anordnung vorzugsweise so getroffen, dass die Abtriebswelle zwischen dem Schaltelement und der Zunge angeordnet ist.

Diese Maßnahmen haben den Vorteil, dass die Feder durch die Umschaltung nur sehr geringfügig beansprucht wird, so dass eine große Anzahl von Schaltzyklen möglich ist. Da das Schaltelement in einem von der Zunge entfernten Bereich an der Feder angreift, ergibt sich so eine geringe Biegebeanspruchung und eine leichte Umschaltmöglichkeit.

In weiter bevorzugter Ausführung der Erfindung besteht die Feder aus mehreren Federelementen, die vorzugsweise miteinander paketiert sind.

Hierdurch wird die Lebensdauer der Feder weiter erhöht.

Gemäß einer weiteren Ausgestaltung der Erfindung sind im Gehäuse Einsätze zur Halterung der Feder im Bereich ihrer beiden Enden aufgenommen.

Diese Maßnahme hat den Vorteil, dass die Einsätze ausreichend stabil ausgeführt sein können, um auch nach zahlreichen Umschaltungen zwischen den beiden Positionen der Feder einen Verschleiß im Bereich der Enden zu vermeiden. Auf diese Weise kann das Gehäuse aus einem relativ weichen Material, wie z.B. Kunststoff oder Aluminium, bestehen, während die Feder z.B. aus Federstahl besteht. Die Einsätze sind ausreichend stabil, z.B. aus gehärtetem Stahl ausgeführt, um einen Verschleiß im Bereich der Enden zu vermeiden.

Gemäß einer weiteren Ausgestaltung der Erfindung ist das Getriebe als Ziehkeilgetriebe ausgebildet, das mittels mindestens eines Ziehkeils zwischen zwei unterschiedlichen Übersetzungsverhältnissen umschaltbar ist.

Auf diese Weise lässt sich in Kombination mit der erfindungsgemäßen Ausführung der Feder als bistabiles Feder eine sehr zuverlässige Umschaltung des Getriebes zwischen den beiden Übersetzungsverhältnissen gewährleisten. Außerdem ergibt sich eine kurze Gesamtbaulänge.

Gemäß einer weiteren Ausgestaltung der Erfindung weist das Ziehkeilgetriebe zwei Abtriebszahnräder auf, die drehbar auf der Abtriebswelle gelagert sind und über einen Ziehkeil mit der Werkzeugaufnahme koppelbar sind.

Hierbei ist der Ziehkeil vorzugsweise mittels der Feder zwischen der ersten und der zweiten Position axial auf der Abtriebswelle verschiebbar ausgebildet, um ein erstes oder ein zweites Übersetzungsverhältnis auszuwählen.

Gemäß einer weiteren Ausführung der Erfindung ist eine Mehrzahl von Zielkeilen auf der Abtriebswelle mittels einer Mitnehmerhülse axial verschiebbar, die mit der Feder zur axialen Verschiebung gekoppelt ist.

Gemäß einem weiteren Merkmal der Erfindung sind die Ziehkeile mit ihren Enden in Schlitzen der Mitnehmerhülse gehalten.

Gemäß einem weiteren Merkmal der Erfindung weist der mindestens eine Ziehkeil eine Vertiefung aufweist, die mit Kugeln zusammenwirkt, um in Abhängigkeit von der axialen Position des mindestens einen Zielkeils eine Kopplung zwischen einem Mitnehmer und einem der Abtriebszahnräder zu bewirken.

Durch diese Maßnahmen ist ein sehr zuverlässiger und einfacher Aufbau des schaltbaren Getriebes ermöglicht. Eine Umschaltung ist sowohl im Leerlauf als auch im Stillstand möglich. Auch wird eine einfache Montage ermöglicht. Die Ziehkeile können zusammen mit dem Mitnehmer, der Mitnehmerhülse, der Führungshülse und den zugehörigen Kugeln als eine Einheit vormontiert werden.

Das Schaltelement ist gemäß einer weiteren Ausführung der Erfindung als Drehsteller ausgebildet, der mit einem Schieber gekoppelt ist, mittels dessen die Feder zur Umschaltung zwischen der ersten und zweiten Position und umgekehrt beaufschlagbar ist.

Auf diese Weise ergibt sich eine einfache und zuverlässige Betätigung von außen.

Gemäß einer weiteren Ausgestaltung der Erfindung ist das Getriebe mit einer Spindelarretierung gekoppelt.

Erfindungsgemäß kann so eine Arretierung der Spindel etwa bei einem Werkzeugwechsel gewährleistet werden. In Kombination mit der erfindungsgemäßen Ausgestaltung des Getriebes als Ziehkeilgetriebe kann die Spindelarretierung an der Abtriebswelle angreifen. Auf diese Weise lässt sich auch eine einfache Variante dieser Ausführung ohne Spindelarretierung ohne umfangreiche konstruktive Änderungen erzielen.

Die Spindelarretierung weist vorzugsweise eine Mehrzahl von Klemmelementen an der Abtriebswelle des Getriebes auf, die zwischen Mitnehmernocken an der Abtriebswelle und einem auf der Abtriebswelle drehfest aufgenommenen Nockenring mit Spiel beweglich gehalten sind.

Die Klemmelemente sind hierbei vorzugsweise durch eine Anlaufscheibe mit Federelementen derart vorgespannt, dass die Klemmelemente beim Antrieb der Abtriebswelle in einer Arbeitsrichtung zumindest teilweise entgegen der Arbeitsrichtung vorgespannt werden.

Auf diese Weise ist eine präzise und dauerhafte Funktion der Spindelarretierung gewährleistet, ohne dass ein vorzeitiger Verschleiß der Spindelarretierung auftreten kann. Da nämlich die Federelemente mit der Anlaufscheibe kombiniert sind, werden Toleranzen auf diese Weise reduziert, und es wird eine Verschiebung der Klemmelemente zum Ansprechen der Spindelarretierung ermöglicht. So wird ein Verkippen der Klemmelemente verhindert und eine saubere Drehmomentübertragung zu jeder Zeit durch eine Linienberührung gewährleistet.

Es ergibt sich ein maximal übertragbares Reibungselement, bei dessen Überschreiten ein Durchrutschen der Klemmelemente erfolgt. So wird eine Überlastung der Spindelarretierung in jedem Falle vermieden.

Insgesamt ergibt sich in Kombination mit der Ausführung des umschaltbaren Getriebes als Ziehkeilgetriebe eine besonders platzsparende und zuverlässige Ausführung.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen Teil-Längsschnitt durch ein erfindungsgemäßes Elektrowerkzeug in Form einer Zwei-Gang-Bohrmaschine;
- Fig. 2: eine freigeschnittene Aufsicht des Getriebes gemäß Fig. 1;
- Fig. 3: einen Teil-Querschnitt durch das Elektrowerkzeug gemäß Fig. 1 im Bereich der Spindelarretierung, mit einem Ausschnitt im Bereich des Drehknopfes zur Umschaltung des Getriebes;
- Fig. 4: einen Teil-Querschnitt durch das Elektrowerkzeug gemäß Fig. 1 im Bereich des Ziehkeilgetriebes und einer Feder zur Umschaltung;
- Fig. 5: eine vergrößerte Ansicht des Getriebes gemäß Fig. 1 in einer gegenüber Fig. 1 veränderten Schaltstellung und
- Fig. 6: einen Teil-Längsschnitt des Elektrowerkzeuges gemäß Fig. 1 in einer gegenüber Fig. 1 veränderten Schaltstellung.

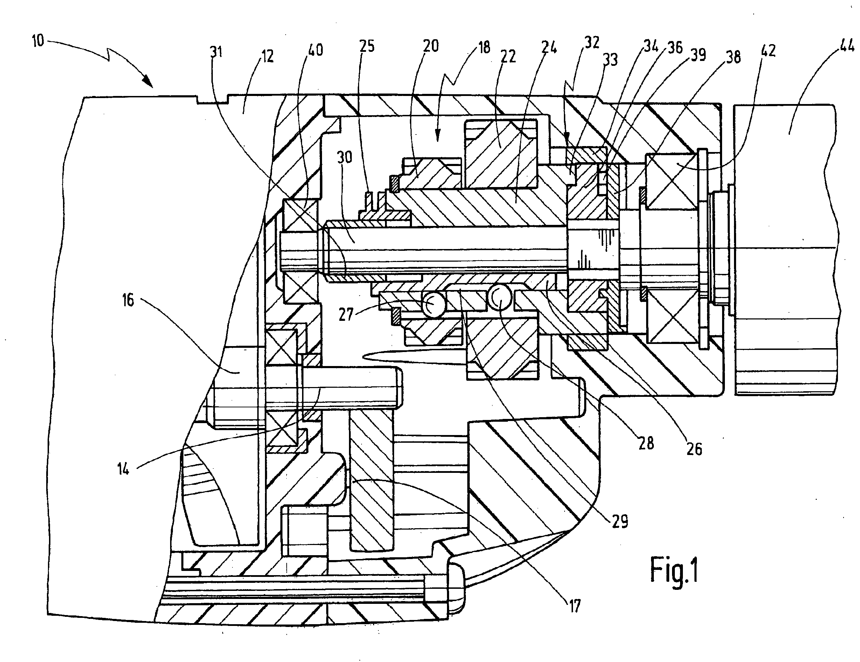

In Fig. 1 ist ein Teil-Längsschnitt eines insgesamt mit 10 bezeichneten Elektrowerkzeuges in Form einer Zwei-Gang-Bohrmaschine dargestellt.

Das Elektrowerkzeug 10 weist einen nicht dargestellten Antriebsmotor auf, dessen Motorwelle 16 oder Antriebswelle 16 über ein Motorritzel 14 ein insgesamt mit 18 bezeichnetes Zielkeilgetriebe antreibt.

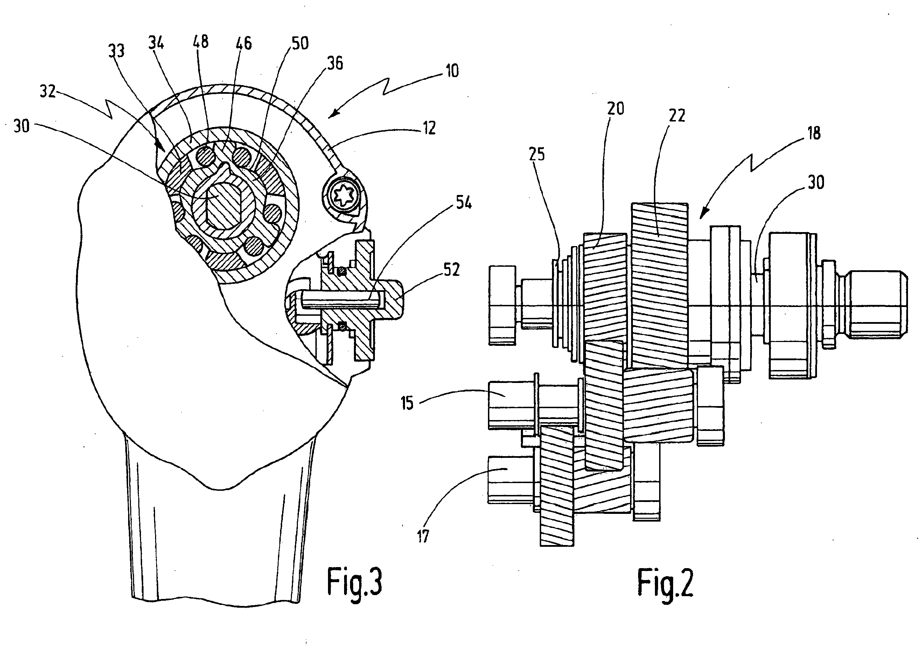

Das Ziehkeilgetriebe 18, das gesondert in Fig. 2 dargestellt ist, weist zwei vom Motorritzel 14 gleichzeitig angetriebene Vorgelegewellen 15, 17 auf. Über die beiden Vorgelegewellen 15, 17 werden schließlich zwei Abtriebszahnräder 20 bzw. 22 angetrieben, so dass zwei unterschiedliche Getriebestufen mit unterschiedlichen Übersetzungsverhältnissen parallel mitlaufen. Über insgesamt drei um jeweils 120° zueinander winkelversetzt angeordnete Ziehkeile 26 (nur einer in Fig. 1 erkennbar) kann eine Kopplung zwischen einem Mitnehmer 24 und dem ersten Abtriebszahnrad 20 oder dem zweiten Abtriebszahnrad 22 erreicht werden, so dass sich eine drehfeste Verbindung zwischen dem Mitnehmer 24 und dem ersten Abtriebszahnrad 20 oder dem zweiten Abtriebszahnrad 22 ergibt.

Der Mitnehmer 24 ist unmittelbar auf der Abtriebswelle 30 frei drehbar aufgenommen.

Die Ziehkeile 26 greifen an ihrem einen Ende jeweils in einen axialen Schlitz einer Mitnehmerhülse 25 ein und sind mittels eines Vorsprungs an der Mitnehmerhülse 25 festgelegt. Die Ziehkeile 26 können durch axiale Verschiebung der Mitnehmerhülse 25 zwischen der in Fig. 1 gezeigten Position und einer anderen Position axial verstellt werden. Die Mitnehmerhülse 25 ist mittels einer Führungshülse 31 auf der Abtriebswelle 30 verschiebbar aufgenommen.

In der in Fig. 1 gezeigten Position ist das erste Abtriebszahnrad 20 drehfest mit dem Mitnehmer 24 gekoppelt, da eine zugeordnete Kugel 27, die in einer Radialbohrung des Abtriebszahnrads 20 beweglich ist, durch den Ziehkeil 26 in einer solchen Position gehalten ist, dass sich eine formschlüssige Verbindung zwischen dem Mitnehmer 24 und dem ersten Abtriebszahnrad 20 ergibt.

In dieser Position ist das zweite Abtriebszahnrad 22 nicht drehfest mit dem Mitnehmer 24 gekoppelt, da die zugeordnete, radial in einer Bohrung gehaltene Kugel 28 in eine Aussparung 29 des Ziehkeils 26 eingreift und somit nicht mit dem zweiten Abtriebszahnrad 22 eingekoppelt ist.

In Fig. 1 ist das Getriebe 18 mit eingekoppeltem zweiten Gang dargestellt.

Wird dagegen der Ziehkeil 26 aus der in Fig. 1 gezeigten Position axial durch Bewegung der Mitnehmerhülse 25 nach links verschoben, so gelangt die Kugel 27 in den Freiraum 29, und die Kugel 28, die mit dem zweiten Zahnrad 22 zusammenwirkt, wird durch eine Nase des Ziehkeils 26 radial nach außen verschoben, so dass sich eine drehfeste Kopplung mit dem zweiten Abtriebszahnrad 22 ergibt.

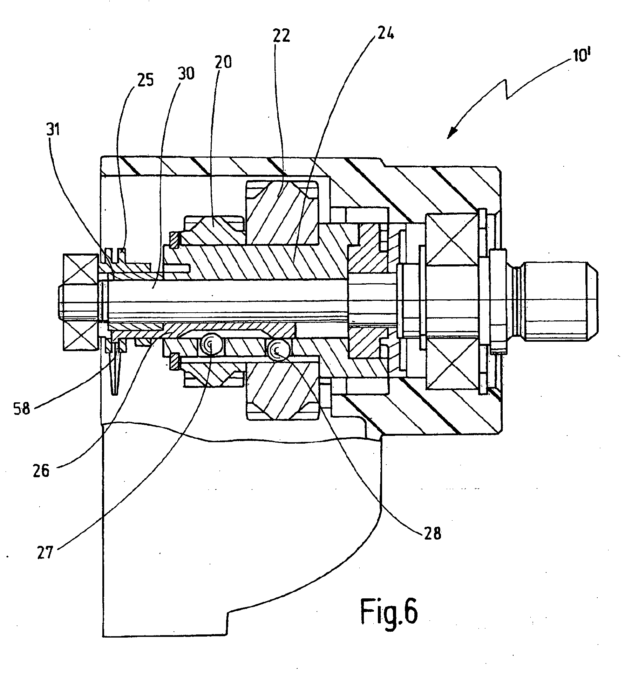

Auf diese Weise wird der erste Gang eingelegt. Diese Position ist in Fig. 6 dargestellt und insgesamt mit 10' bezeichnet.

Es versteht sich, dass die zwei anderen um jeweils 120° versetzt angeordneten Ziehkeile, die in Fig. 1 nicht erkennbar sind, in gleicher Weise über entsprechende Kugeln mit dem Mitnehmer 24 bzw. den beiden Abtriebszahnrädern 20, 22 zusammenwirken und gleichzeitig mit dem Ziehkeil 26 über die Mitnehmerhülse 25 verschoben werden.

Durch eine axiale Verschiebung der Ziehkeile 26 über die Mitnehmerhülse 25 lässt sich somit entweder das erste Abtriebszahnrad 20 oder das zweite Abtriebszahnrad 22 mit dem Mitnehmer 24 drehfest koppeln.

Die Bewegung des Mitnehmers 24 wird nun mittels einer insgesamt mit 32 bezeichneten Spindelarretierung auf einen Werkzeughalter 44 übertragen. Aufbau und Funktion der Spindelarretierung 32 entsprechen der aus der DE 10 2007 007 734 A1 bekannten Ausführung, die hier vollständig durch Bezugnahme eingeschlossen wird.

Danach weist der Mitnehmer 24 insgesamt drei axial hervorstehende Mitnehmernocken 33 auf, die jeweils um 120° versetzt zueinander angeordnet sind (vgl. Fig. 3).

Auf der Abtriebswelle 30 drehfest gehalten ist ferner ein Nockenring 36, an dem jeweils drei um 120° zueinander versetzt angeordnete Nockenelemente 46 vorgesehen sind. Beidseits jeweils eines Nockenelementes 46 sind Klemmelemente 48 in Form von Rollen eingeschlossen, die zwischen den benachbarten Mitnehmernocken 33, Führungsflächen 50 am Nockenring 36 und einem umschließenden Außenring 34 gehalten sind. Der Außenring 34 ist fest in das Gehäuse 12 eingepresst.

Der Nockenring 36 ist in Folge dieser Konstruktion mit einem gewissen Spiel von etwa 10° relativ zum Mitnehmer bzw. den Mitnehmernocken 33 drehbeweglich. Unmittelbar angrenzend an den Nockenring 36 ist auf der Abtriebswelle 30 eine Anlaufscheibe 38 (vgl. Fig. 1) mittels eines Zweikants, der an einer zentralen Ausnehmung der Anlaufscheibe 38 ausgebildet ist, festgelegt. Die Anlaufscheibe 38 ist scheibenförmig ausgebildet und weist in Richtung zu den Klemmelementen oder Rollen 48 vorstehende Federelemente 39 auf.

Wird der Mitnehmer 24 über das erste Abtriebszahnrad 20 oder das zweite Abtriebszahnrad 22 in Arbeitsrichtung, d.h. im Uhrzeigersinn, angetrieben, so ergibt sich durch eine formschlüssige Verbindung zwischen den Mitnehmernocken 33, den Klemmelementen oder Rollen 48 und den Nocken 46 der Nockenscheibe 36 eine formschlüssige Übertragung des Drehmomentes vom Mitnehmer 24 auf die Abtriebswelle 30. Wird nun die Drehrichtung umgekehrt, indem z.B. ein Werkzeug aus der Werkzeugaufnahme gelöst wird, so möchte die Abtriebswelle 30 in die entgegengesetzte Richtung drehen. Die Abtriebswelle 30 wird dabei arretiert, da die Rollen 48 zwischen den schrägen Führungsflächen 50 des Nockenrings 36 und dem Außenring 34 verklemmt werden. Zur Vorspannung dient dabei die zugeordnete Federzunge des Anlaufrings 38. Überschreitet allerdings ein auf die Abtriebswelle 30 wirkendes Drehmoment einen gewissen durch das Reibmoment der Klemmelemente 48 mit dem Außenring 34 vorgegebenen Betrag, so rutschen die Klemmelemente 48 am Außenring 34 durch. Eine Überlastung der Spindelarretierung 32 ist somit ausgeschlossen.

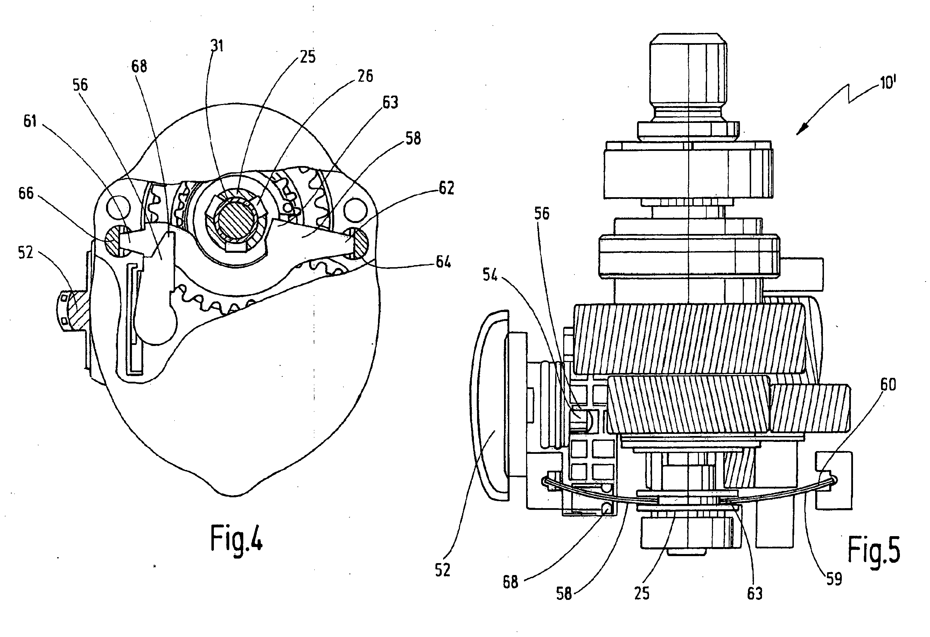

Um nun das Ziehkeilgetriebe 18 zwischen der ersten und der zweiten Position umzuschalten, muss, wie zuvor bereits erläutert wurde, die Mitnehmerhülse 25 axial verschoben werden. Die Feder 58, die als Blattfeder in Form eines "Knackfrosches" ausgeführt ist, ist hierzu mit der Mitnehmerhülse 25 gekoppelt. Zur Betätigung der Feder 58 dient ein Drehknopf 52 (vgl. Fig. 3), der über einen exzentrisch angeordneten Zapfen 54 einen Schieber 56 (vgl. Fig. 5) in Axialrichtung der Abtriebswelle 30 bewegt (in Fig. 3 ist der Zapfen 54 gerade in einer Ansicht gezeigt, in der er in der Schnittebene mittig liegt).

Der Zapfen 54 greift gemäß Fig. 5 in eine Aussparung des Schiebers 56 ein, so dass dieser bei Verdrehung des Drehknopfes 52 axial verschoben wird. Der Schieber 56 greift über zwei Mitnehmerzungen 68 an der Feder 58 an, so dass diese in Axialrichtung hin- und herbewegt werden kann. Sobald die Feder 58 um einen gewissen Betrag in die eine Richtung bewegt wird, springt sie automatisch in ihre jeweilige Endstellung um und nimmt diesen stabilen Endzustand ein. Dabei wird die Mitnehmerhülse 25 mitgenommen, so dass die Ziehkeile 26 in die entsprechende Endposition mitbewegt werden.

Wird dagegen durch Verdrehung des Drehknopfes 52 ein gewisser Zwischenzustand in der entgegengesetzten Richtung erreicht, so springt die Feder 58 in ihre andere Endposition um. In Abhängigkeit von der Stellung des Drehknopfes 52 können sich somit die Ziehkeile 26 immer nur in der einen oder in der anderen Endposition befinden.

Erlaubt die Ziehkeilstellung, z.B. bei noch nicht eingerasteten Kugeln 27, 28, kein Einrasten in eine Endstellung, so bleibt die Fdere 58 in einem vorgespannten Zustand und springt in einen Endzustand, sobald eine Kugel 27, 28 eingerastet ist.

Eine Umschaltung durch Verdrehen des Drehknopfes 52 führt also immer zu einem stabilen Endzustand. Die Ziehkeile 26 werden also durch die Feder 58 in die jeweils eine oder andere Endposition gezogen, so dass sich eine drehfeste Verbindung des Mitnehmers 24 entweder mit dem ersten Abtriebszahnrad 20 oder mit dem zweiten Abtriebszahnrad 22 ergibt.

Die Feder 58 ist an ihren beiden Enden 61, 62 gemäß Fig. 4 und 5 in Aussparungen 64 des Gehäuses 12 gehalten und durch Einsätze 66 aus gehärtetem Stahl festgelegt. Auf diese Weise wird ein Verschleiß der Ausnehmungen 64 durch Bewegung der Enden 61, 62 der Feder 58 vermieden.

Die Feder 58 besteht, wie in Fig. 5 erkennbar, aus zwei Federelementen 59, 60, die miteinander paketiert sind. Dadurch wird die Biegebelastung für jedes einzelne der Federelemente 59, 60 reduziert, wodurch die Lebensdauer deutlich erhöht wird, so dass die Feder 58 eine erheblich größere Anzahl von Schaltzyklen aushält.

Die Form der Feder 58 ist gut in Fig. 4 erkennbar. Die Feder 58 bzw. die beiden Federelemente 59, 60 sind als längliche Blattfeder in Form eines "Knackfrosches" ausgebildet mir einer geschwungen Form, die in die beiden Enden 61, 62 ausläuft und in ihrer Mitte eine annährend teilkreisförmige Ausnehmung aufweist. An der rechten Innenseite der Ausnehmung ist eine in Richtung auf die Mitnehmerhülse 25 hervorstehende Zunge 63 vorgesehen, die in die Mitenehmerhülse 25 eingreift. Das Schaltelement 56 greift gemäß Fig. 5 in einem von der Zunge 63 entfernten Bereich an der Feder 58 an. Durch diese Konfiguration wird die Biegebelastung der Feder 58 reduziert.

## Patentansprüche

1. Elektrowerkzeug mit einem schaltbaren Getriebe (18), insbesondere Bohr- oder Schraubmaschine, mit einer Antriebswelle (16) und mindestens einer Abtriebswelle (30), die mit der Antriebswelle (16) in einer ersten Position mit einem ersten Antriebsmodus und in einer zweiten Position mit einem zweiten Antriebsmodus zum Antrieb einer Werkzeugaufnahme (44) koppelbar ist, wobei zur Umschaltung zwischen den beiden Positionen eine Feder (58) vorgesehen ist, die eine Umschaltung zwischen den beiden Positionen unterstützt, wobei die Feder (58) als bistabile Feder, vorzugsweise als Blattfeder mit zwei stabilen Endzuständen, ausgebildet ist, wobei die Feder (58) eine Zunge (63) aufweist, die mit dem Getriebe (18) zur Umschaltung gekoppelt ist, wobei die Feder (58) an zwei einander gegenüberliegenden Enden (61, 62) in einem Gehäuse (12) derart gehalten ist, dass sie das Getriebe (18) bei Betätigung mittels eines Schaltelementes (56) zwischen der ersten und der zweiten Position und umgekehrt umschaltet, **dadurch gekennzeichnet, dass** im Gehäuse (12) Einsätze (64, 66) zur Halterung der Feder (58) im Bereich ihrer beiden Enden (61, 62) aufgenommen sind.

2. Elektrowerkzeug nach einem der vorhergehenden Ansprüche, **dadurch gekennzeichnet, dass** die Feder (58) im Gehäuse (12) unter Vorspannung gehalten ist.

3. Elektrowerkzeug nach einem der vorhergehenden Ansprüche, **dadurch gekennzeichnet, dass** die Zunge (63) in einem Bereich zwischen den beiden Enden (61, 62) der Feder (58) angeordnet ist.

4. Elektrowerkzeug nach Anspruch 3, **dadurch gekennzeichnet, dass** das Schaltelement (56) in einem von der Zunge (63) entfernten Bereich an der Feder (58) angreift, wobei die Abtriebswelle (30) vorzugsweise zwischen dem Schaltelement (56) und der Zunge (63) angeordnet ist.

5. Elektrowerkzeug nach einem der vorhergehenden Ansprüche, **dadurch gekennzeichnet, dass** die Feder (58) aus mehreren Federelementen (59, 60) besteht, die vorzugsweise miteinander paketiert sind.

6. Elektrowerkzeug mit einem schaltbaren Getriebe (18), insbesondere Bohr- oder Schraubmaschine, mit einer Antriebswelle (16) und mindestens einer Abtriebswelle (30), die mit der Antriebswelle (16) in einer ersten Position mit einem ersten Antriebsmodus und in einer zweiten Position mit einem zweiten Antriebsmodus zum Antrieb einer Werkzeugaufnahme (44) koppelbar ist, wobei zur Umschaltung zwischen den beiden Positionen eine Feder (58) vorgesehen ist, die eine Umschaltung zwischen den beiden Positionen unterstützt, wobei die Feder (58) als bistabile Feder, vorzugsweise als Blattfeder mit zwei stabilen Endzuständen, ausgebildet ist, wobei die Feder (58) eine Zunge (63) aufweist, die mit dem Getriebe (18) zur Umschaltung gekoppelt ist, insbesondere nach einem der vorhergehenden Ansprüche, **dadurch gekennzeichnet, dass** das Getriebe (18) als Ziehkeilgetriebe ausgebildet ist, das mittels mindestens eines Ziehkeils (26) zwischen zwei unterschiedlichen Übersetzungsverhältnissen umschaltbar ist, wobei das Ziehkeilgetriebe vorzugsweise zwei Abtriebszahnräder (20, 22) aufweist, die drehbar auf der Abtriebswelle (30) gelagert sind und über mindestens einen Ziehkeil (26) mit der Werkzeugaufnahme (44) koppelbar sind.

7. Elektrowerkzeug nach Anspruch 6, **dadurch gekennzeichnet, dass** der mindestens eine Ziehkeil (26) mittels der Feder (58) zwischen der ersten und der zweiten Position axial auf der Abtriebswelle (30) verschiebbar ausgebildet ist, um ein erstes oder ein zweites Übersetzungsverhältnis auszuwählen.

8. Elektrowerkzeug nach Anspruch 6 oder 7, **dadurch gekennzeichnet, dass** eine Mehrzahl von Zielkeilen (26) auf der Abtriebswelle (30) mittels einer Mitnehmerhülse (25) axial verschiebbar sind, die mit der Feder (58) zur axialen Verschiebung der Ziehkeile (26) gekoppelt ist, und dass die Ziehkeile (26) vorzugsweise mit ihren Enden in Schlitzen der Mitnehmerhülse (25) gehalten sind.

9. Elektrowerkzeug nach einem der Ansprüche 6 bis 8, **dadurch gekennzeichnet, dass** mindestens ein Ziehkeil (26) eine Vertiefung (29) aufweist, die mit Kugeln (28, 29) zusammenwirkt, um in Abhängigkeit von der axialen Position des Zielkeils (26) eine Kopplung zwischen einem Mitnehmer (24) und einem der Abtriebszahnräder (20, 22) zu bewirken.

10. Elektrowerkzeug mit einem schaltbaren Getriebe (18), insbesondere Bohr- oder Schzaubmaschine, mit einer Antriebswelle (16) und mindestens einer Abtriebswelle (30), die mit der Antriebswelle (16) in einer ersten Position mit einem ersten Antriebsmodus und in einer zweiten Position mit einem zweiten Antriebsmodus zum Antrieb einer Werkzeugaufnahme (44) koppelbar ist, wobei zur Umschaltung zwischen den beiden Positionen eine Feder (58) vorgesehen ist, die eine Umschaltung zwischen den beiden Positionen unterstützt, wobei die Feder (58) als bistabile Feder, vorzugsweise als Blattfeder mit zwei stabilen Endzuständen, ausgebildet ist, wobei die Feder (58) eine Zunge (63) aufweist, die mit dem Getriebe (18) zur Umschaltung gekoppelt ist, insbesondere nach einem der vorhergehenden Ansprüche, wobei die Feder (58) an zwei einander gegenüberliegenden Enden (61, 62) in einem Gehäuse (12) derart gehalten ist, dass sie das Getriebe (18) bei Betätigung mittels eines Schaltelementes (56) zwischen der ersten und der zweiten Position und umgekehrt umschaltet, insbesondere nach einem der Ansprüche 2 bis 9, **dadurch gekennzeichnet, dass** das Schaltelement (52) als Drehsteller ausgebildet ist, der mit dem Schaltelement (56) gekoppelt ist, mittels dessen die Feder (58) zur Umschaltung zwischen der ersten und zweiten Position und umgekehrt beaufschlagbar ist.

11. Elektrowerkzeug nach einem der vorhergehenden Ansprüche, **dadurch gekennzeichnet, dass** das Getriebe (18) vorzugsweise über den Mitnehmer (24) mit einer Spindelarretierung (32) gekoppelt ist.

12. Elektrowerkzeug nach Anspruch 11, **dadurch gekennzeichnet, dass** die Spindelarretierung (32) eine Mehrzahl von Klemmelementen (48) an der Abtriebswelle (30) des Getriebes (18) aufweist, die zwischen Mitnehmernocken (33) an der Abtriebswelle (30) und einem auf der Abtriebswelle (30) drehfest aufgenommenen Nockenring (36) mit Spiel beweglich gehalten sind.

13. Elektrowerkzeug nach Anspruch 11 oder 12, **dadurch gekennzeichnet, dass** die Klemmelemente (48) durch eine Anlaufscheibe (38) mit Federelementen (58) derart vorgespannt sind, dass die Klemmelemente (48) beim Antrieb der Abtriebswelle (30) in einer Arbeitsrichtung zumindest teilweise entgegen der Arbeitsrichtung vorgespannt werden.

## Claims

1. An electric power tool with a switchable gearing (18), in particular a drilling or screwing machine, having a drive shaft (16) and at least one output shaft (30) which for driving a tool holder (44) can be coupled with the drive shaft (16) for a first driving mode in a first position, and for a second driving mode in a second position, with a spring (58) provided between the two positions for supporting the switching-over operation between the two positions, wherein the spring (58) is configured as a bistable spring, preferably as a leaf spring with two stable final states, **characterized in that** the spring (58) comprises a tongue (63) which is coupled to the gearing (18) for switching over, wherein the spring (58) is held in a housing (12) by two opposite ends (61, 62) so that when operated by a switching element (56) it will switch over the gearing (18) from the first to the second position, and vice versa, **characterized in that** inserts (64, 66) intended to hold the spring (58) in the area of its two ends (61, 62) are provided in the housing (12).

2. The electric power tool of any of the preceding claims, **characterized in that** the spring (58) is held in the housing (12) in biased condition.

3. The electric power tool of any of the preceding claims, **characterized in that** the tongue (63) is arranged in an area between the two ends (61, 62) of the spring (58).

4. The electric power tool of claim 3, **characterized in that** the switching element (56) engages the spring (58) in an area remote from the tongue (63), wherein preferably the output shaft (30) is arranged between the switching element (56) and the tongue (63).

5. The electric power tool of any of the preceding claims, **characterized in that** the spring (58) consists of a plurality of spring elements (59, 60) which preferably are stacked in the form of a packet.

6. An electric power tool with a switchable gearing (18), in particular a drilling or screwing machine, having a drive shaft (16) and at least one output shaft (30) which for driving a tool holder (44) can be coupled with the drive shaft (16) for a first driving mode in a first position, and for a second driving mode in a second position, with a spring (58) provided between the two positions for supporting the switching-over operation between the two positions, wherein the spring (58) is configured as a bistable spring, preferably as a leaf spring with two stable final states, **characterized in that** the spring (58) comprises a tongue (63) which is coupled to the gearing (18) for switching over, in particular according to any of the preceding claims, **characterized in that** the gearing (18) is configured as a sliding-key gearing that can be switched over between two different transmission ratios by at least one sliding key (26), wherein preferably the sliding-key gearing comprises two output gears (20, 22) which are rotatably seated on the output shaft (30) and which can be coupled with the tool holder (44) via at least one sliding key (26).

7. The electric power tool of claim 6, **characterized in that** the at least one sliding key (26) is designed in this case for being axially displaced on the output shaft (30) by the spring (58), between the first and the second position, for selecting a first or a second transmission ratio.

8. The electric power tool of claim 6 or 7, **characterized in that** a plurality of sliding keys (26) can be axially displaced on the output shaft (30) by a driver bushing (25) which is coupled with the spring (58) for axial displacement of the sliding keys (26), and **in that** preferably the ends of the sliding keys (26) are held in slots in the driver bushing (25).

9. The electric power tool of any of claims 6 to 8, **characterized in that** at least one sliding key (26) comprises a recess (29) which coacts with balls (28, 29) to effect coupling between a driver (24) and one of the output gears (20, 22), depending on the axial position of the at least one sliding key (26).

10. An electric power tool with a switchable gearing (18), in particular a drilling or screwing machine, having a drive shaft (16) and at least one output shaft (30) which for driving a tool holder (44) can be coupled with the drive shaft (16) for a first driving mode in a first position, and for a second driving mode in a second position, with a spring (58) provided between the two positions for supporting the switching-over operation between the two positions, wherein the spring (58) is configured as a bistable spring, preferably as a leaf spring with two stable final states, **characterized in that** the spring (58) comprises a tongue (63) which is coupled to the gearing (18) for switching over, in particular according to any of claims 2 to 9, **characterized in that** the switching element (52) is configured as a rotary actuator which is coupled with the switching element (56) by means of which the spring (58) can be actuated to effect switching-over between the first and the second position, and vice versa.

11. The electric power tool of any of the preceding claims, **characterized in that** the gearing (18) preferably is coupled with a spindle locking mechanism (32) via the driver (24).

12. The electric power tool of claim 11, **characterized in that** the spindle locking mechanism (32) comprises a plurality of clamping elements (48) on the output shaft (30) of the gearing (18) that are movably held with some play between driver cams (33) on the output shaft (30) and a cam ring (36) supported in non-rotational relationship on the output shaft (30).

13. The electric power tool of claim 11 or 12, **characterized in that** the clamping elements (48) are biased by a thrust ring (38) with spring elements (58) so that when the output shaft (30) is driven in a working direction the clamping elements (48) will be biased against the working direction at least in part.

## Revendications

1. Outil électrique muni d'un engrenage commutable (18), en particulier perceuse ou visseuse, comprenant un arbre d'entraînement (16) et au moins un arbre de sortie (30) qui peut être accouplé à l'arbre d'entraînement (16) dans une première position avec un premier mode d'entraînement et dans une deuxième position avec un deuxième mode d'entraînement pour l'entraînement d'un porte-outil (44), un ressort (58) étant prévu pour la commutation entre les deux positions, lequel supporte une commutation entre les deux positions, le ressort (58) étant réalisé sous forme de ressort bistable, de préférence sous forme de ressort à lame avec deux états d'extrémité stables, le ressort (58) présentant une langue (63) qui est accouplée avec l'engrenage (18) pour la commutation, le ressort (58) étant maintenu aux deux extrémités mutuellement opposées (61,62) dans un boîtier (12) de telle sorte qu'il commute l'engrenage (18) lors de l'actionnement au moyen d'un élément de commutation (56) entre la première et la deuxième position et inversement, **caractérisé en ce que** des inserts (64, 66) sont reçus dans le boîtier (12) pour retenir le ressort (58) dans la région de ses deux extrémités (61, 62).

2. Outil électrique selon l'une quelconque des revendications précédentes, **caractérisé en ce que** le ressort (58) est maintenu avec précontrainte dans le boîtier (12).

3. Outil électrique selon l'une quelconque des revendications précédentes, **caractérisé en ce que** la langue (63) est disposée dans une région entre les deux extrémités (61, 62) du ressort (58).

4. Outil électrique selon la revendication 3, **caractérisé en ce que** l'élément de commutation (56) vient en prise dans une région éloignée de la langue (63) sur le ressort (58), l'arbre de sortie (30) étant disposé de préférence entre l'élément de commutation (56) et la langue (63).

5. Outil électrique selon l'une quelconque des revendications précédentes, **caractérisé en ce que** le ressort (58) se compose de plusieurs éléments de ressort (59, 60) qui sont de préférence mis en paquet les uns avec les autres.

6. Outil électrique muni d'un engrenage commutable (18), en particulier perceuse ou visseuse, comprenant un arbre d'entraînement (16) et au moins un arbre de sortie (30) qui peut être accouplé à l'arbre d'entraînement (16) dans une première position avec un premier mode d'entraînement et dans une deuxième position avec un deuxième mode d'entraînement pour l'entraînement d'un porte-outil (44), un ressort (58) étant prévu pour la commutation entre les deux positions, lequel supporte une commutation entre les deux positions, le ressort (58) étant réalisé sous forme de ressort bistable, de préférence sous forme de ressort à lame avec deux états d'extrémité stables, le ressort (58) présentant une langue (63) qui est accouplée avec l'engrenage (18) pour la commutation, en particulier selon l'une quelconque des revendications précédentes, **caractérisé en ce que** l'engrenage (18) est réalisé sous forme d'engrenage à clavetage, qui peut être commuté au moyen d'au moins une clavette (26) entre deux rapports de démultiplication différents, l'engrenage à clavetage présentant de préférence deux roues dentées de sortie (20, 22) qui sont montées à rotation sur l'arbre de sortie (30) et qui peuvent être accouplées par le biais d'au moins une clavette (26) au porte-outil (44).

7. Outil électrique selon la revendication 6, **caractérisé en ce que** l'au moins une clavette (26) est réalisée de manière déplaçable axialement sur l'arbre de sortie (30) au moyen du ressort (58) entre la première et la deuxième position, afin de sélectionner un premier ou un deuxième rapport de démultiplication.

8. Outil électrique selon la revendication 6 ou 7, **caractérisé en ce qu'**une pluralité de clavettes (26) sont déplaçables axialement sur l'arbre de sortie (30) au moyen d'un manchon d'entraînement (25), qui est accouplé au ressort (58) en vue du déplacement axial des clavettes (26), et **en ce que** les clavettes (26) sont maintenues de préférence avec leurs extrémités dans des fentes du manchon d'entraînement (25).

9. Outil électrique selon l'une quelconque des revendications 6 à 8, **caractérisé en ce qu'**au moins une clavette (26) présente un renfoncement (29) qui coopère avec des billes (28, 29) afin de provoquer en fonction de la position axiale de la clavette (26) un accouplement entre un dispositif d'entraînement (24) et l'une des roues dentées de sortie (20, 22).

10. Outil électrique muni d'un engrenage commutable (18), en particulier perceuse ou visseuse, comprenant un arbre d'entraînement (16) et au moins un arbre de sortie (30) qui peut être accouplé à l'arbre d'entraînement (16) dans une première position avec un premier mode d'entraînement et dans une deuxième position avec un deuxième mode d'entraînement pour l'entraînement d'un porte-outil (44), un ressort (58) étant prévu pour la commutation entre les deux positions, lequel supporte une commutation entre les deux positions, le ressort (58) étant réalisé sous forme de ressort bistable, de préférence sous forme de ressort à lame avec deux états d'extrémité stables, le ressort (58) présentant une langue (63) qui est accouplée avec l'engrenage (18) pour la commutation, en particulier selon l'une quelconque des revendications précédentes, le ressort (58) étant maintenu aux deux extrémités mutuellement opposées (61,62) dans un boîtier (12) de telle sorte qu'il commute l'engrenage (18) lors de l'actionnement au moyen d'un élément de commutation (56) entre la première et la deuxième position et inversement, en particulier selon l'une quelconque des revendications 2 à 9, **caractérisé en ce que** l'élément de commutation (52) est réalisé sous forme d'actionneur rotatif qui est accouplé à l'élément de commutation (56), au moyen duquel le ressort (58) peut être sollicité pour la commutation entre la première et la deuxième position et inversement.

11. Outil électrique selon l'une quelconque des revendications précédentes, **caractérisé en ce que** l'engrenage (18) est de préférence accouplé par le biais du dispositif d'entraînement (24) à un blocage de broche (32).

12. Outil électrique selon la revendication 11, **caractérisé en ce que** le blocage de broche (32) présente une pluralité d'éléments de serrage (48) sur l'arbre de sortie (30) de l'engrenage (18), lesquels sont maintenus de manière déplaçable avec jeu entre des cames d'entraînement (33) sur l'arbre de sortie (30) et un anneau de came (36) reçu de manière solidaire en rotation sur l'arbre de sortie (30).

13. Outil électrique selon la revendication 11 ou 12, **caractérisé en ce que** les éléments de serrage (48) sont précontraints par un disque de butée (38) avec des éléments de ressort (58) de telle sorte que les éléments de serrage (48), lors de l'entraînement de l'arbre de sortie (30) dans une direction de travail, soient précontraints au moins en partie dans le sens opposé à la direction de travail.
